# EUROPEAN PATENT APPLICATION

(11) **EP 1 376 914 A2**
(43) Date of publication of application: **02.01.2004**
(21) Application number: 03254053.6
(22) Date of filing: 26.06.2003
(51) Int. Cl.: H04H 9/00

(54) **Collection of behaviour data on a broadcast data network**

(30) Priority: 28.06.2002 US 183646
(71) Applicant: Nokia Corporation, 02150 Espoo (FI)
(72) Inventor: Kylmäkoski, Jenni, 33210 Tampere (FI); Luoma, Juha-Pekka, 33100 Tampere (FI); Hussmann, Holger, 33210 Tampere (FI)
(74) Representative: Read, Matthew Charles

(57) **Abstract**

A method and system for collecting usage data to assist an advertiser with a targeted marketing activity wherein the advertiser accesses the usage data to determine an appropriate advertisement for a second user. The method comprises receiving a data resource from a communications network, storing the data resource, displaying the data resource for a first user, extracting usage data that relates a characteristic of the first user to a characteristic of the data resource, and storing the usage data. The method may further comprise requesting the data resource.

## Description

This invention relates to a system for collecting targeted marketing usage data from a communications network that will assist an advertiser with a targeted marketing activity.

Digital Video Broadcasting (DVB) is an open standard that applies to digital transmission of a television signal. DVB employs a Moving Picture Experts Group (MPEG) compression algorithm such as MPEG-2 to digitally store the video and audio components of the television signal. DVB sub-standards address satellite (DVB-S), cable (DVB-C), and terrestrial (DVB-T) transmission of channel signals. In addition, DVB addresses the transmission of system information, a program guide, and a scrambling system that protects the signal. A typical DVB data stream includes television broadcasting, streaming video, real-time music streaming, content downloads such as electronic books and newspapers, electronic commerce actions, mobile telephony data, and Internet Protocol (IP) data such as web browsing.

Web advertisers traditionally examine the number of "hits" a web page receives to decide whether to invest in advertising on a particular web page. Broadcast media advertisers, on the other hand, traditionally rely upon user behavior and demographic statistics to target a particular segment of the population. The advent of DVB services make it necessary for web advertisers to consider targeted marketing initiatives.

The prior art targeted marketing systems collect usage data from an Internet-based network or a television broadcast. For the Internet-based network, the prior art systems calculate the usage for a user by recording the number of times a user "hits" a web page, that is, the number of times a user requests a particular web page. For the television broadcast, the prior art systems collect usage data on a per household basis from a selected few households using viewer questionnaires and channel counters. In both the Internet-based network and the television network, the results depend upon the demographics of the chosen sample and do not accurately reveal the actual usage.

Thus, there is a need for a method, system, and computer program product for collecting usage data to assist an advertiser with a targeted marketing activity. An advertiser may maximize the power of an advertisement by analyzing the usage data and focusing future advertisements to a particular segment of the user population. The method, system, and computer program product for collecting usage data disclosed herein addresses this need.

A method, system, and computer program product for collecting usage data to assist an advertiser with a targeted marketing activity wherein the advertiser accesses the usage data to determine an appropriate advertisement for a second user. The method comprises receiving a data resource from a communications network, storing the data resource, displaying the data resource for a first user, extracting usage data that relates a characteristic of the first user to a characteristic of the data resource, and storing the usage data. The method may further comprise requesting the data resource.

The communications network in the method, system, and computer program product includes either a broadcast data network or a hybrid network. If the communications network is a hybrid network, it includes broadcast data and Internet data. Broadcast data includes television broadcast data digital video broadcast data, streaming video data, video-on-demand data, or near video-on-demand data. Internet data includes web page data, software download data, digital image data, music download data, video download data, radio station data, real-time music streaming, multimedia content data for books, magazines, or newspapers, or electronic commerce data.

The method, system, and computer program product may further comprise creating a profile for a user, and storing the profile, wherein the profile includes at least one content filtering requirement. The data resource satisfying said at least one content filtering requirement that includes at least one content category type. The method, system, and computer program product may further comprise uploading the profile from the client computer to a server computer connected to the client computer, and monitoring the communications network for said at least one content filtering requirement. The creating of the profile may further comprise providing demographic data for the user, and either selecting at least one content category type for the user to receive or selecting at least one content category type for the user to not receive.

In another embodiment, the method comprises storing at least one content filtering requirement for a first user, monitoring a communications network for a data resource that satisfies said at least one content filtering requirement, storing the data resource, displaying the data resource for a first user, extracting usage data that relates a characteristic of the first user to a characteristic of the data resource, and storing the usage data. In this embodiment, the advertiser accesses the usage data to determine an appropriate advertisement for a second user. The method may further comprise comparing a content category type for the data resource to said at least one content category type.

In the embodiment of the invention described hereinafter, there is provided a user behaviour agent (UBA) which differs from the prior art because it calculates the usage of services that content providers broadcast or push to a customer, as well as the services that the customer request. In addition, UBA is not limited to collecting WWW usage statistics and also collects streaming media and data carousel usage statistics. Even though the UBA collects data from various broadcast networks and services, it is also useful in hybrid networks (i.e., a network that carries unidirectional broadcast data as well as bi-directional Internet data) and may filter the content and service selection for a user. Since an exemplary implementation of the UBA is as a web browser application, it is a generic solution and transparent to the client software.

The accompanying figures illustrate the details of an example of a method, system, and computer program product according to the invention, for collecting usage data, both as to its structure and operation. Like reference numbers and designations in these figures refer to like elements.

Figure **1** is a network diagram that illustrates an operating environment of a system for collecting usage data from a broadcast data network.

Figure **2A** expands upon the network diagram shown in Figure **1** to illustrate the hardware and software components that comprise client computer **110** and server computer **150**.

Figure **2B** is a network diagram that illustrates, in greater detail, the hardware and software components that comprise UBA client **220** as shown in Figure **2A**.

Figure **2C** is a network diagram that illustrates, in greater detail, the hardware and software components that comprise UBA server **260** as shown in Figure **2A**.

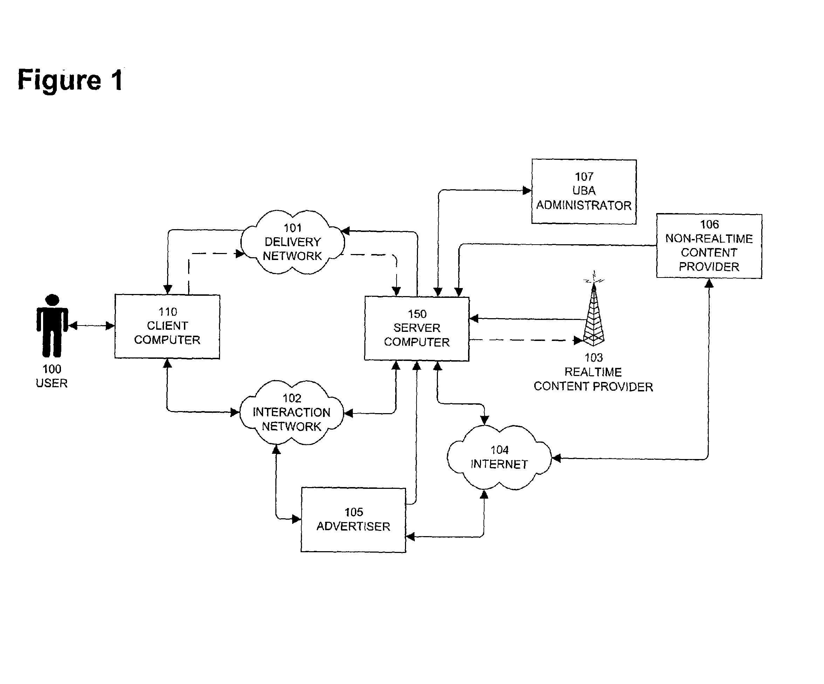

Figure **1** is a network diagram that illustrates an operating environment of a system for collecting usage data from a broadcast data network. Delivery network **101**, interaction network **102**, and Internet **104**, as shown in Figure **1**, are public communication networks that support broadcast delivery of data packets, in general, and broadcast delivery of Internet protocol (IP) data packets, in particular. The invention disclosed herein also contemplates network architectures comparable to delivery network **101**, interaction network **102**, and Internet **104**. Comparable network architectures include a public switched telephone network, a digital video broadcasting (DVB) network, a wireless network, and a private network. A wireless network includes a cellular network and a satellite network. A private network includes a local area network, a personal area network such as a Bluetooth network, an intranet, and an extranet. An intranet is a private communication network that provides an organization, such as a corporation, with a secure means for trusted members of the organization to access the resources on the organization's network. In contrast, an extranet is a private communication network that provides an organization, such as a corporation, with a secure means for the organization to authorize non-members of the organization to access certain resources on the organization's network. The invention disclosed herein also contemplates network protocols such as Ethernet, Token Ring, and proprietary network protocols comparable to the Internet protocol.

Referring again to Figure **1**, client computer **110** is a general-purpose client computer and server computer **150** is a general-purpose server computer. In one embodiment, non-real-time content provider **106** transmits content data to server computer **150** via a secure connection over an Internet Protocol (IP) based network such as Internet **104**. The transmission of the content data by non-real-time content provider **106** may be solicited from user **100,** client computer **110**, or server computer **150** or unsolicited. For the solicited transmission, non-real-time content provider **106** transmits the content data in response to a request for the content data. For the unsolicited transmission, non-real-time content provider **106** transmits the content data when it is available for transmission. In another embodiment, real-time content provider **103** transmits content data to server computer **150** via a secure connection over an IP based network such as Internet **104**. In yet another embodiment, the communication connection between server computer **150** and real-time content provider **103** is a bi-directional connection. In this embodiment, the communication connection transmits request messages from user **100**, client computer **110**, or server computer **150**. Advertiser **105** transmits advertisement data to server computer **150** via a secure connection over an IP based network such as Internet **104**. Server computer **150** stores the content data and the advertisement data. User **100** operates client computer **110** to send a request for content data to server computer **150** via interaction network **102**. In response to the request, client computer **110** receives a broadcast data stream from server computer **150** via delivery network **101**. The broadcast data stream includes synchronized content data and advertisement data. Interaction network **102** is a bi-directional network such as a public switched telephone network (PSTN), integrated services digital network (ISDN), global system for mobile communications (GSM), universal mobile telecommunications system (UMTS), or the equivalent. Delivery network **101** is a unidirectional network such as a digital video broadcasting (DVB) network or the equivalent. In addition, delivery network **101** may include broadcast networks that utilize a PSTN, ISDN, GSM, UMTS, or the equivalent.

The content data that content provider **106** transmits includes World Wide Web (WWW) browsing data, television broadcast data, and electronic commerce data. WWW browsing data includes software downloads such as standalone programs, Java applets, JavaScript programs, and common gateway interface (CGI) programs. WWW browsing data also includes audio and video downloads such as MP3, WAV, and MOV files, digital photographs such as JPEG, GIF, and TIFF files and other still images, real-time music data streaming, and web page interaction using the hypertext markup language (HTML) and extensible markup language (XML). Television broadcast data includes streaming video, video on-demand (VOD), and near video on-demand (NVOD). Electronic commerce data includes media purchases such as books and newspapers, and consumer purchases.

The advertisement data that advertiser **105** transmits includes WWW, broadcast, and print media advertisements. WWW advertisements include HTML and XML advertisements such as banner and pop-up advertisements. Broadcast advertisements include traditional television and radio advertisements transmitted via a broadcast data network. Print media advertisements include digital magazine and newspaper subscriptions and e-mail advertisements transmitted via a broadcast data network.

The behavior data collected for user **100** helps advertiser **105** focus the advertisement data to a specific target demographic audience by identifying either an audience that is likely to show an interest in the advertisement or an audience that has shown an interest in the advertisement. If the target demographic audience for an advertisement is males between the ages of 18 and 35, a network service that is requested by a user in that segment of the population will likely generate interest in the advertisement. Alternatively, an advertiser may want to directly market any user who demonstrates an interest in an advertisement over the next 30 days. Since the behavior data is personal to user **100**, user **100** and the owner of the UBA data must enter into an agreement before the owner releases the behavior data. In one embodiment, user **100** enters into an agreement with the owner of the UBA data as a result of a voluntary registration process that compensates user **100** by providing a discount or coupon in exchange for the behavior data. As a result of the registration process, the UBA creates a profile for user **100** that includes personal data such as the name, street address, telephone number, or electronic mail address of user **100**. If user **100** demonstrates an interest in the advertiser's advertisement over the next 30 days, the UBA will pass the behavior data for user **100** to the advertiser for direct marketing.

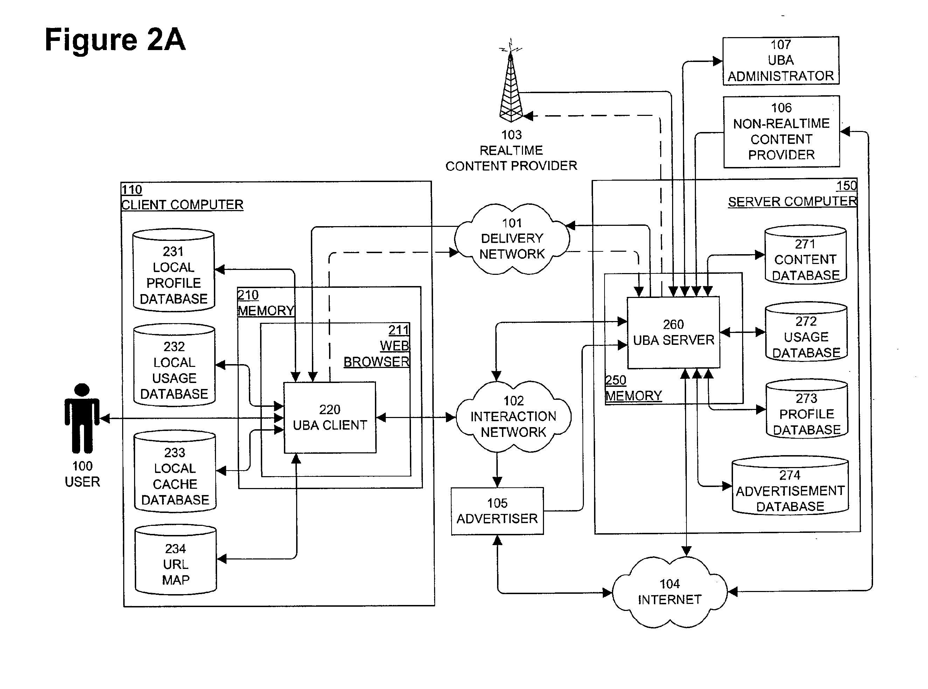

Figure **2A** expands upon the network diagram shown in Figure **1** to illustrate the hardware and software components that comprise client computer **110** and server computer **150**. Even though Figure **2A** illustrates the system as a distributed architecture, one skilled in the art will realize that another embodiment is to integrate the functions performed by client computer **110** and server computer **150** into a single general-purpose computer.

Client computer **110** as shown in Figure **2A** is a general-purpose computer comprising memory **210**, a processor (not shown), and data storage. The data storage includes local profile database **231**, local usage database **232**, local cache database **233**, and uniform resource locator (URL) map **234**. A bus (not shown) is the communication medium for client computer **110** that connects memory **210**, the processor (not shown), and the data storage. Figure **2A** illustrates the data storage for client computer **110** as separate physical devices however, one skilled in the art will realize that another embodiment is to store the data in a single physical device that includes a separate logical partition for each type of data illustrated in Figure **2A**. Figure **2A** also illustrates the data storage for client computer **110** as internal devices however, one skilled in the art will realize that another embodiment is for the data storage to be external to client computer **110** and accessible via a network connection. The configuration of memory **210** includes computer programs such as web browser **211** and user behavior agent (UBA) client **220**. Web browser **211** is a general-purpose hypertext transfer protocol (HTTP) web browser such as Netscape Communicator, Microsoft Internet Explorer, or Mosaic. Figure **2A** illustrates UBA client **220** as a plug-in component to web browser **211** however, one skilled in the art will realize that another embodiment is for UBA client **220** to be separately resident in memory **210** and communicate with web browser **211** via an interprocess communication mechanism. User **100** communicates with delivery network **101** and interaction network **102** via UBA client **220**. UBA client **220** communicates with UBA server **260** of server computer **150** via delivery network **101** and interaction network **102.**

Server computer **150** as shown in Figure **2A** is a general-purpose server computer comprising memory **250**, a processor (not shown), and data storage. The data storage includes content database **271**, usage database **272**, profile database **273**, and advertisement database **274**. A bus (not shown) is the communication medium for server computer **150** that connects memory **250**, the processor (not shown), and the data storage. Figure **2A** illustrates the data storage for server computer **150** as separate physical devices however, one skilled in the art will realize that another embodiment is to store the data in a single physical device that includes a separate logical partition for each type of data illustrated in Figure **2A**. Figure **2A** also illustrates the data storage for server computer **150** as internal devices however, one skilled in the art will realize that another embodiment is for the data storage to be external to server computer **150** and accessible via a network connection. The configuration of memory **250** includes computer programs such as UBA server **260**. UBA server **260** communicates with real-time content provider **103**, advertiser **105**, non-real-time content provider **106**, and UBA administrator **107**. UBA server **260** also communicates with advertiser **105** and non-real-time content provider **106** via Internet **104**. UBA server **260** communicates with UBA client **220** of client computer **110** via delivery network **101** and interaction network **102**.

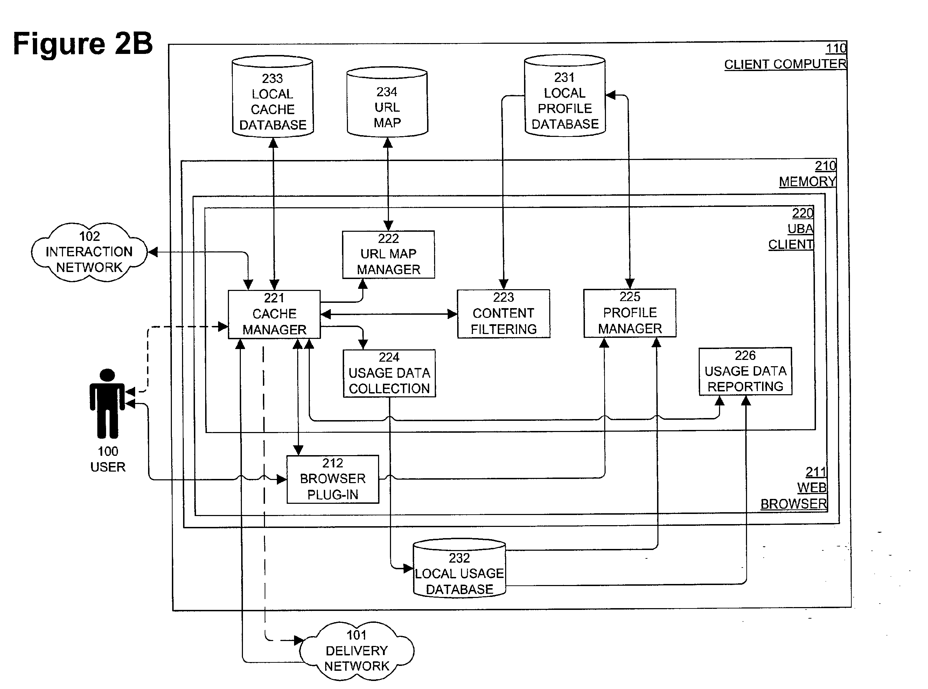

Figure **2B** is a network diagram that illustrates, in greater detail, the hardware and software components that comprise UBA client **220** as shown in Figure **2A**. UBA client **220** further comprises cache manager **221**, URL map manager **222**, content filtering **223**, usage data collection **224**, profile manager **225**, and usage data reporting **226**. Web browser **211** further comprises browser plug-in **212**.

User **100** communicates with cache manager **221** via browser plug-in **212** of web browser **211**. Optionally, user **100** communicates directly with cache manager **221**. Cache manager **221** receives a content data from delivery network **101**. Cache manager **221** also receives subscription request data and content data from interaction network **102**. The terms content data or resource as used herein refer to content data or a multimedia content file received over a network connection using a protocol such as hypertext transfer protocol (HTTP), unidirectional hypertext transfer protocol (UHTTP), file transfer protocol (FTP), or the equivalent.

Depending upon the subscription request data, cache manager **221** periodically monitors a connection on either delivery network **101** or interaction network **102** to receive a resource such as an update to a specified World-Wide-Web (WWW) page. Cache manager **221** uses HTTP to emulate a normal HTTP cache when communicating with client software however, the client configuration must post all HTTP requests through the cache using, for example, the standard "HTTP proxy" setting in a web browser. If cache manager **221** includes an HTTP cache to store resources received over the delivery network **101**, cache manager **221** will also operate as a normal HTTP cache for any data received via interaction network **102**.

Content data that cache manager **221** receives via delivery network **101** using a protocol such as UHTTP or DVB data/object carousels may not be available via interaction network **102**. Content data that is not available via interaction network **102** typically is not associated with an HTTP or FTP URL. Instead, cache manager **221** uniquely identifies a resource by employing a broadcast URL scheme such as the local identifier URL scheme (LID) (see Advanced Television Enhancement Forum (ATVEF) Enhanced Content Specification, 2000, http://www.atvef.com/library/ATVEF%20spec1_1a_Final.pdf) or DVB (see Digital Video Broadcasting Multimedia Home Platform, version 1.0.2, DVB BlueBook A057 Rev. 2, February 26, 2002, http://www.mhp.org/technical_essen/pdf_and_other_files/a057r2.pdf). However, standard client software web browsers such as Netscape and Internet Explorer do not support these URL types. The system described herein includes the translation of the broadcast URL for a received resource into a unique HTTP URL on client computer **110**.

After receiving a resource, cache manager **221** communicates with content filtering **223** to determine whether the resource meets the requirements specified in the profile for user **100**. If the resource meets the requirements specified by user **100**, cache manager **221** stores the resource in local cache database **233**. In one embodiment, the content filters compare the profile for user **100** stored in local profile database **231** to the content description available for the received resource. The profile for user **100** includes characteristics that describe how user **100** uses the content data. The characteristics include demographic data that describe user **100**, the type of content, how long user **100** accessed the content, or whether user **100** examined any advertisement associated with the content. In another embodiment, content filtering **223** descrambles the resource before applying the content filters and returns the descrambled resource to cache manager **221** for storage in local cache database **233**.

Prior to storing the resource in local cache database **233**, cache manager **221** communicates with URL map manager **222** to assign an HTTP URL to the resource. URL map manager **222** converts a broadcast URL to an HTTP URL and stores the mapping, that is, a tuple of the two URLs, in URL map **234**. URL map manager **222** also periodically analyzes URL map **234** to remove from the database any mappings for a resource that is no longer in local cache database **233**.

As shown in Figure **2B**, the implementation of URL map manager **222** includes modified HTTP cache software. In another embodiment, URL map manager **222** may be a separate program or process that connects with an unmodified HTTP cache or HTTP server. If URL conversion is necessary at the client, the installation of the web browser client will then include plug-in components for different broadcast URLs. The plug-in components would retrieve the HTTP URL corresponding to a broadcast URL from the database. The plug-in component or the actual web browser software would then retrieve the corresponding resource from the HTTP cache or server. In addition, the plug-in components could control the reception of unidirectional data such as tuning to a particular DVB transport stream.

UBA client **220** collects usage data for user **100**. After receiving a resource, cache manager **221** communicates with usage data collection **224** to retrieve the metadata (i.e., data that describes data) associated with the resource. The metadata includes a classification type for the content, a group description for targeted advertising, or the equivalent. There are several alternative ways for the broadcast operator to deliver the metadata cache manager **221**. First, the broadcast operator may append the metadata to the URL that identifies the resource. Second, the broadcast operator may insert the metadata into an extensible markup language (XML) or HTML resource using meta tags such as those defined in the W3C's PICS and RDF frameworks. Third, the broadcast operator may transmit the metadata when announcing a streaming media resource by defining extensions to SAP/SDP announcements for the metadata. Usage data collection **224** parses the usage data from the resource and stores the usage data and an identifier for user **100** in local usage database **232**.

The usage data collected includes delivery type, content descriptions, Internet data, quality-of-service (QOS) data, user detail data, and location data. The delivery type further includes cached content, audio streaming, video streaming, package delivery, and real-time data streaming. The content descriptions further include bandwidth usage, content size, downloading time, streaming time, and duration. The Internet data further includes URLs, usage of additional information of broadcast (e.g., WWW links in streaming data), and usage of cached content. The QOS data further includes the number of successful connections and the number of attempted connections. The user detail data further includes ordering behavior (e.g., how far in advance and how often), billing behavior, billing amount, and user claims. The location information further includes content location and user location. The UBA is beneficial to a data broadcast operator because the operator may optimize the content to suit the user requirements, better allocate bandwidth and pricing. Thus, the UBA may improve the popularity of a site.

UBA client **220** also delivers a usage data report for user **100** to interaction network **102**. UBA server **260** typically generates the request for the usage data report however, in another embodiment, user **100** may also generate the request. Cache manager **221** communicates with usage data reporting **226** to retrieve the usage data for user **100** from local usage database **232**. Usage data reporting **226** formats the usage data and transmit the report. Cache manager **221** periodically uploads the data in local usage database **232** to server computer **150** for storage in usage database **272**.

To receive a resource via UBA client **220**, user **100** sends a request to web browser **211** to download the resource identified by a URL from UBA server **260** and display the resource. Cache manager **221** acts as a proxy and retrieves the resource on behalf of web browser **211**. If the resource is available in local cache database **233**, cache manager **221** immediately retrieves the resource and delivers the resource to web browser **211**. If the resource is not available in local cache database **233**, cache manager **221** communicates with content filtering **223** to configure the content filters for user **100** and contacts server computer **150** via interaction network **102** and UBA server **260** to retrieve the resource from content database **271**. UBA server **260** returns the resource to UBA cache manager **221** via delivery network **101**, however cache manager **221** may also retrieve the resource via interaction network **102**. When cache manager **221** receives the resource, it checks the category of the resource and stores the details of the content request as usage data. Cache manager **221** periodically uploads the usage data to UBA server **260**. The details of the content request include the content category, content provider identifier, size of the resource, time of day for the download, hit ratio for the cache, current URL, previous URL, or the equivalent. If the resource is not available from content database **271**, cache manager **221** will return the expired resource to web browser **211** with an HTTP stale resource warning.

To edit a profile in local profile database **231** for user **100**, user **100** communicates with profile manager **225** via browser plug-in **212** of web browser **211**. Each profile in local profile database **231** defines the content categories that user **100** wants to receive, as well as the content categories that user **100** does not want to receive. In addition, UBA client **220** may change the profile for user **100** according to a particular browsing behavior. In another embodiment, UBA client **220** does not modify the profile edited by user **100**, but instead maintains a separate profile for user **100**. Cache manager **221** periodically uploads the data in local profile database **231** to server computer **150** for storage in profile database **273**.

To receive content associated with a resource, cache manager **221** continues to receive content in the background after receiving the resource. For example, if the resource is a HTML page, cache manager **221** will receive the HTML page and begin processing the HTML page while continuing to receive the associated resources included as links on the HTML page. If the resource passes the content filters, the associated resources are also stored in local cache database **233**, but are linked to the resource. If the resource does not pass the content filters, cache manager **221** stops receiving the associated resources and removes any associated resources receiving in the interim.

To maintain the profile for user **100**, cache manager **221** communicates with profile manager **225** to update the profile for user **100** when a resource matches the profile. Thus, the profile for user **100** will contain distribution data for the user's content requests among the various content categories. In addition, the profile for user **100** may include demographic data.

To upload usage data to UBA server **260** requires the consent of user **100**. If user **100** consents to uploading the usage data, cache manager **221** transmits the accumulated usage data to UBA server **260** via a secure connection such as a secure IP connection. The upload does not occur with any particular regularity. For example, the upload may occur when UBA client **220** detects that user **100** has set up a connection via interaction network **102** and local usage database **232** includes "enough" data. The uploaded data includes the number of content requests that user **100** has made for each content category and each content provider, the URLs of selected "key resources" requested by user **100**, and demographic data. There are several alternative ways to associate the uploaded usage data with user **100**. First, if user **100** completed the UBA registration process, the uploaded usage data may include the unique identifier assigned to user **100** during the registration process. This alternative allows the usage data of a registered user to always be associated with user **100**. Second, since a semi-permanent identifier exists for each user **100**, the uploaded usage data may include the semi-permanent identifier similar to the process of sending a "cookie" to a web browser. This alternative allows the usage data to be associated with the same user across multiple, if not every, upload session. Third, the uploaded usage data may be anonymous. This alternative only allows the usage data to be consistent with a single upload session, but still provides valuable information on the behavior of user groups and individual user.

To classify the profile for user **100**, cache manager **221** sends a request UBA server **260** to associate the profile with one or more user group profiles. UBA server **260** maintains the list of user group profiles. This may occur, for example, after cache manager **221** uploads the usage data to UBA server **260**. This classification allows content filtering **223** to filter out any advertisements that do not target a matching user group profile. In one embodiment, cache manager **221** periodically updates the user group information to retrieve any changes in the user group profiles. In an alternate embodiment, UBA server **260** may match user **100** to one or more predefined profiles and download the identifier for each profile to the corresponding UBA client **220**. For example, if the usage data indicates that user **100** is a soccer fan and lives in Boston, UBA server **260** will send the profile identifier for the "soccer fan" profile and the profile identifier for the "Boston resident" profile to the UBA client **220** for user **100**. The download of the profile identifiers may occur via interaction network **102** following the upload of usage data or via delivery network **101**. UBA server **260** inserts profile identifiers into advertisements and content items to facilitate targeted advertisement and content filtering by UBA client **220**.

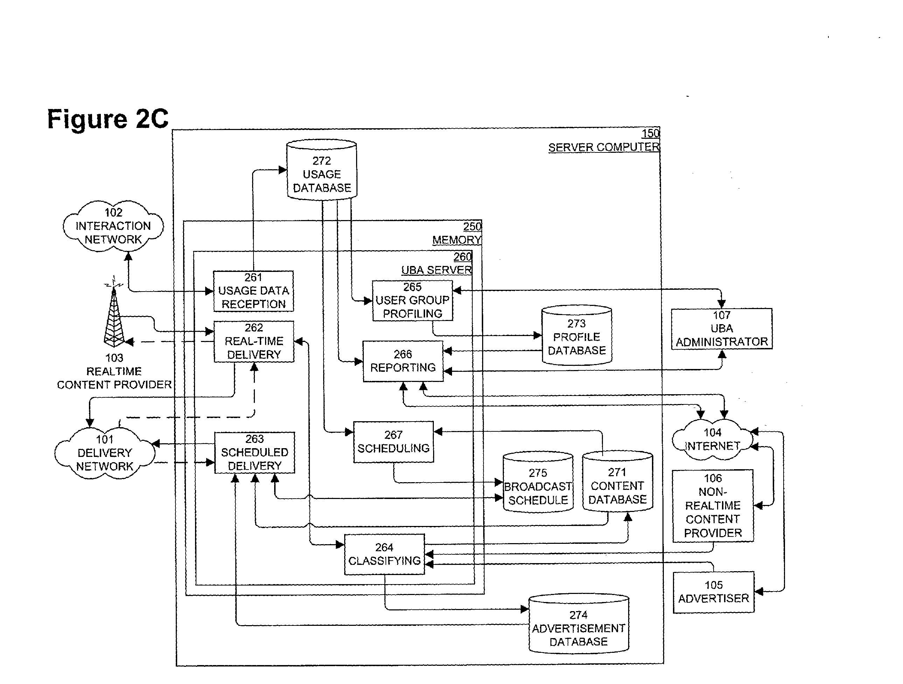

Figure **2C** is a network diagram that illustrates, in greater detail, the hardware and software components that comprise UBA server **260** as shown in Figure **2A**. UBA server **260** further comprises usage data reception **261**, real-time delivery **262**, scheduled delivery **263**, classifying **264**, user group profiling **265**, reporting **266**, and scheduling **267**.

Advertiser **105** and non-real-time content provider **106** initiate the processing performed by UBA server **260**. Classifying **264** receives content data from non-real-time content provider **106** and advertising data from advertiser **105**. Classifying **264** associates a classification with each content data item and advertisement data item and stores the content data in content database **271** and the advertisement data in advertisement database **274**. The classification for content data may include the identity of non-real-time content provider **106** or advertiser **105**, a rating from an external content rating service, keywords contained in the data, or the equivalent. The classification for a resource may include the identity of non-real-time content provider **106** or advertiser **105**, a category type such as music, news, or sports, an integer weight indicating the relevance of the resource, or the equivalent. In another embodiment, the classification for the resource includes more than one category type. To minimize the storage required for the usage data, only the content category and content provider identifier are stored for a browsed resource. However, UBA client **220** may classify some resources as "key" resources and track the resource individually when user **100** accesses it with a web browser.

Real-time content provider **103** may transmit a real-time stream of content data to real-time delivery **262**. Real-time delivery **262** communicates the data stream to classifying **264** for classification and transmits the content data to UBA client **220** via delivery network **101**. Optionally, real-time delivery **262** responds to the transmissions sent by real-time content provider **103** and may receive responses from delivery network **101**. The broadcast network operator receives content data streams from UBA server **260** via a secure connection. In another embodiment, UBA server **260** multiplexes content data streams with other broadcast content such as normal television programming before forwarding the received data to a broadcast network. The broadcast network operator may request a report from UBA server **260** concerning data traffic forwarded to the delivery network **101**. The report may contain information such as the traffic distribution among content providers and content category types. This information is useful to the broadcast network operator when conducting network planning and billing.

Scheduled delivery **263** controls the delivery of content data that UBA server **260** does not receive from real-time content provider **103**. Scheduled delivery **263** identifies the resources for delivery, retrieves the resources from content database **271**, and prepares a schedule for the delivery and stores the schedule in broadcast schedule **275**. Scheduled delivery **263** also identifies the advertisement data stored in advertisement database **274** that shares the same content category classification as the resources. Scheduled delivery **263** synchronizes the content data and advertisement data and transmits the synchronized data stream to delivery network **101**. Optionally, scheduled delivery **263** receives responses from delivery network **101**. If the delivery involves a resource that does not require real-time delivery such as a software download, scheduled delivery **263** will schedule the resource multiple times to recover from errors in unidirectional data reception. Scheduled delivery **263** also takes bandwidth limitations into consideration when scheduling the delivery.

Usage data reception **261** receives the usage data uploaded by cache manager **221** of UBA client **220** via interaction network **102**. Usage data reception **261** stores the uploaded usage data in usage database **272**. User group profiling **265**, reporting **266**, and scheduling **267** retrieve usage data from usage database **272** for subsequent processing.

UBA administrator **107** communicates with user group profiling **265** to create, maintain, and delete a profile for user **100** in profile database **273**. Adding a user group profile to UBA server **260** requires defining the usage parameters for the group including demographic data such as the age, occupation, race, gender, marital status, geographic location, level of education, and the equivalent. The definition of the user group profile also includes the content category type associated with the group as well as a quotient value (i.e., percentage) to indicate the portion of users who originate most of the requests for content belonging to the content category type. In another embodiment, the definition of the user group profile includes more than one content category type and the types may be combined with logical operations such as "and," "or," and "not." For example, a user group profile defined by the usage parameters "(sports, 15%) AND (travelling, 20%)" describes users belonging to both the 15% of people who are most active in browsing sports content and the 20% of people who are most active in browsing travelling related content. The creation of a user group profile by UBA administrator **107** triggers user group profiling **265** to assign a unique identifier to the user group profile, store the user group profile in profile database **273**, and associate the unique identifier and the user group profile in profile database **273**. For example, the group of people described above could be interested in advertisements for sport-oriented vacations.

UBA administrator **107** also communicates with reporting **266** to request reports describing the usage data in usage database **272** and the profile data in profile database **273**. UBA administrator **107** may perform a statistical analysis of the usage data to determine which profiles in a user group profile meet a particular pattern of content browsing and will likely benefit from targeted advertising. UBA administrator **107** may also request a report of service usage such as the distribution of requests among content category types and content providers.

Reporting **266** also sends similar reports upon request to non-real-time content provider **106** via Internet **104**. If non-real-time content provider **106** and an operator of UBA server **260** cooperate, non-real-time content provider **106** may add a content category type to a resource. However, UBA server **260** will classify any content not classified by non-real-time content provider **106**. Non-real-time content provider **106** sends the resources to UBA server **260** via a secure connection and, alternatively, may have a contract with UBA server **260** to upload the content to the server. Non-real-time content provider **106** may request information related to the user group profiles however, the statistical information provided in response must not compromise the privacy of user **100**. Non-real-time content provider **106** may also request information concerning how the content usage by user **100** compares to the UBA user community such as the distribution of the requests among the content category types.

Reporting **266** also sends similar reports upon request to advertiser **105** via Internet **104**. If advertiser **105** and an operator of UBA server **260** cooperate, advertiser **105** may add a content category type to an advertisement. However, UBA server **260** will classify any advertisement not classified by advertiser **105**. Advertiser **105** sends the resources to UBA server **260** via a secure connection and, alternatively, may have a contract with UBA server **260** to upload advertisements to the server. Advertiser **105** may request information related to the user group profiles however, the statistical information provided in response must not compromise the privacy of user **100**. Advertiser **105** may also request information concerning how the delivery and consumption of the advertisement data by user **100** compares to the UBA user community such as statistical information on users who followed links transmitted in an advertisement.

Scheduling **267** periodically retrieves usage data from usage database **272** to help determine the schedule stored in broadcast schedule **275**.

Although the embodiments disclosed herein describe a fully functioning system, method, and computer program product for collecting usage data to assist an advertiser with a targeted marketing activity, the reader should understand that other equivalent embodiments exist. Since numerous modifications and variations will occur to those who review this disclosure, the system, method, and computer program product for collecting usage data to assist an advertiser with a targeted marketing activity is not limited to the exact construction and operation illustrated and disclosed herein. Accordingly, this disclosure intends all suitable modifications and equivalents to fall within the scope of the claims.

## Claims

1. A system for collecting usage data to assist an advertiser with a targeted marketing activity, comprising:
a memory device; and
a processor disposed in communication with the memory device, the processor being configured to:
receive a data resource from a communications network;
store the data resource;
display the data resource for a first user;
extract usage data that relates a characteristic of the first user to a characteristic of the data resource; and
store the usage data,
wherein the advertiser accesses the usage data to determine an appropriate advertisement for a second user.

2. A system as claimed in claim 1, wherein the data resource is not requested by the first user.

3. A system as claimed in claim 1, wherein the processor is configured to:
request the data resource.

4. A system as claimed in any preceding claim, wherein the communications network is a broadcast data network.

5. A system as claimed in any preceding claim, wherein the communications network is a hybrid network.

6. A system as claimed in claim 5, wherein the hybrid network is operable to convey broadcast data and Internet data.

7. A system as claimed in claim 4 or 6, wherein the broadcast data includes television broadcast data.

8. A system as claimed in claim 7, wherein the television broadcast data includes digital video broadcast data, streaming video data, video-on-demand data, or near video-on-demand data.

9. A system as claimed in claim 6, wherein the Internet data includes web page data, software download data, digital image data, music download data, video download data, radio station data, real-time music streaming, multimedia content data for books, magazines, or newspapers, or electronic commerce data.

10. A system as claimed in any preceding claim wherein, the processor is configured to:
create a profile for a user that includes at least one content filtering requirement; and
store the profile.

11. A system as claimed in claim 10, wherein said at least one content filtering requirement includes at least one content category type.

12. A system as claimed in claim 10 of 11, wherein the processor is operable to store the profile on a client computer.

13. A system as claimed in claim 10, 11 or 12 wherein the processor is configured to:
upload the profile from the client computer to a server computer connected to the client computer; and
monitor the communications network for said at least one content filtering requirement.

14. A system as claimed in any one of claims 10 to 13, wherein to create the profile, the processor is further configured to:
provide demographic data for the user; and
select at least one content category type for the user to receive or not to receive.

15. A system as claimed in any preceding claim including a multimedia viewer or a web browser to display the data resource.

16. A system as claimed in any preceding claim, wherein the characteristic of the first user includes identification data for the user.

17. A system as claimed in any preceding claim, wherein the characteristic of the data resource includes at least one content category type.

18. A method of collecting usage data to assist an advertiser with a targeted marketing activity, comprising:
receiving a data resource from a communications network;
storing the data resource;
displaying the data resource for a first user;
extracting usage data that relates a characteristic of the first user to a characteristic of the data resource; and
storing the usage data,
wherein the advertiser accesses the usage data to determine an appropriate advertisement for a second user.

19. A method of operating a system as claimed in any one of claims 1 to 17 to collect said usage data.

20. A computer program to be run by a data processor to perform a method as claimed in claim 18 or 19.

21. A system for collecting usage data to assist an advertiser with a targeted marketing activity, comprising:
a memory device; and
a processor disposed in communication with the memory device, the processor configured to:
store at least one content filtering requirement for a first user;
monitor a communications network for a data resource that satisfies said at least one content filtering requirement;
store the data resource;
display the data resource for the first user;
extract usage data that relates a characteristic of the first user to a characteristic of the data resource; and
store the usage data,
wherein the advertiser accesses the usage data to determine an appropriate advertisement for a second user.
